# EUROPEAN PATENT APPLICATION

(11) **EP 4 790 591 A1**
(43) Date of publication of application: **12.08.2026**
(21) Application number: 25155942.3
(22) Date of filing: 05.02.2025
(51) Int. Cl.: G06N 3/0455, G01S 13/89, G01S 17/89, G06N 3/0895, G01S 13/88

(54) **PRE-TRAINING OF AN ENCODER WITH UNLABELLED DATA BY MASKED PROPERTY PREDICTION**

(71) Applicant: Robert Bosch GmbH, 70442 Stuttgart (DE)
(72) Inventor: Ulrich, Michael, 70469 Stuttgart (DE); Abdelsamad, Mohamed Alaa Marouf, 70176 Stuttgart (DE)

(57) **Abstract**

A method (100) for training an encoder (1) that is configured for encoding a record (2) of measurement data into a representation (3) in a working space, the measurement data comprising measurement values that are associated with positions in space, the method (100) comprising the steps of:
• providing (110) at least one training record (2a) of measurement data;
• designating (120) cells (4) in space, wherein at least some of the cells (4) contain positions in space with which measurement values in the training record (2a) of measurement data are associated;
• determining (130), for each cell (4), based on the training record (2a) of measurement data, an indication (4a) of a predetermined property;
• creating (140) a masked record (2#) of measurement data by removing, from the training record (2a) of measurement data, all measurement values that are associated with positions in space that lie in at least one to-be-masked cell (4#);
• providing (150) the masked record (2#) of measurement data to the to-be-trained encoder (1), thereby obtaining a representation (3);
• decoding (160), by a decoder (5), the representation (3) into a reconstructed indication (4a*) of the predetermined property for at most neighboring cells of not-masked cells (4);
• rating (170), by means of a predetermined loss function (6), how well the reconstructed indication (4a*)of the predetermined property corresponds to the original indication (4a) of the predetermined property derived from the training record (2a) of measurement data; and
• optimizing (180) parameters (1a) that characterize the behavior of the encoder (1) towards the goal of improving the rating (6a) by the loss function (6) upon further processing of training records (2a).

## Description

The present invention relates to the training of machine learning models, e.g., neural networks, for use in, e.g., perception and control systems for vehicles or robots. In particular, the method may work with unlabelled radar and lidar data.

### Background

Maneuvering a vehicle or a robot on company premises, or even in public road traffic, requires a constant monitoring of the environment of the vehicle or robot. For this monitoring, besides one or more cameras, radar and lidar sensors are frequently used. The evaluation of the data with respect to a given task is frequently performed using neural networks or other trainable machine learning models.

The training of the neural networks requires a large amount of training data. Labelling the training data with a desired outcome of the processing with respect to a given task is expensive, which makes labelled training data a scarce resource. Therefore, it is desirable to perform at least part of the training with unlabelled data that are abundant.

### Disclosure of the invention

The invention provides a method for training an encoder that is configured for encoding a record of measurement data into a representation in a working space. In the final configuration, where the encoder has been fully trained, it is intended to decode this representation into an output with respect to a given task. On the way to this final configuration, the decoder may be trained as well. This will be discussed later.

In particular, the measurement data may be in the form of a point cloud. In a point cloud, one or more measurement values are assigned to a position in space that is denoted in any suitable coordinate system, such as Cartesian coordinates or polar coordinates. Radar data and lidar data are prime examples of measurement data that comes in the form of a point cloud. However, even the pixels of an image may be considered to assign, by virtue of their pixel values, measurement data of some sort to a position in space: The position of each pixel corresponds to some position in the real world from where a signal that has given rise to a measurement value has come.

The presently proposed method starts with providing at least one training record of measurement data. This training record of measurement data does not need to be labelled in any way with "ground truth" that the to-be-trained encoder, or some other machine learning model connected downstream, shall reproduce.

Cells are designated in space such that at least some of the cells contain positions in space with which measurement values in the training record of measurement data are associated. For example, the space, including the area where the positions given in the training records but not limited to this area, may be covered by a regular grid (e.g., in two or three dimensions) with an arbitrary cell size. Typically, the cell size is chosen such that only a few (e.g., 5 or less), or even one, position with which a measurement value is associated falls within any one cell. If the cells are designated in three-dimensional space, they are usually termed "voxels".

Based on the training record of measurement data, an indication of a predetermined property is determined for each cell. This property may, for example, be a Boolean property that can only have the values "True" or "False", but it may also be a quantitative property that may be expressed by a numeric value.

A prime example of a predetermined property is occupancy information. Such occupancy information indicates whether at least one measurement value in the training record of measurement data is associated with a position in the considered cell, or in at least one cell of a considered group of cells, respectively. This property is a Boolean one. Occupancy information of all cells therefore forms a binary matrix or tensor. It is particularly easy to compare occupancy information that has later been determined using the encoder (or any other machine learning model connected downstream) with the original occupancy information determined from the training record of measurement data.

From the training record of measurement data, a masked record of measurement data is created. To this end, all measurement values that are associated with positions in space that lie in at least one to-be-masked cell are removed from the measurement values in the training record of measurement data. For example, the to-be-masked cells may be chosen randomly.

This masked record of measurement data is provided to the to-be-trained encoder, so that a representation results. In particular, such a representation may be compressed in the sense that it depends on less variables than the original measurement data. But this is not required. This potential reduction of the dimensionality of the representation compared with the original measurement data is only a secondary effect. The most important change that is made when proceeding from the original measurement data to the representation is that the representation comprises some information about semantic features in the measurement data.

By means of a decoder, the representation is decoded into a reconstructed indication of the predetermined property for at most neighboring cells of not masked cells. This means that the information is asked for and used further only with respect to one or more neighboring cells of not masked cells. The decoder itself may be configured to reconstruct the indication of the predetermined property also for cells that are not neighboring cells of not masked cells, but this information is not used further. Thus, to save computation time and memory, preferably, the decoder is configured to reconstruct the indication of the predetermined property only for at most the neighboring cells of not masked cells. Savings of computation time and especially memory in turn permit the training of larger encoder architectures using a given amount of hardware resources.

The reconstructing of the indication of the predetermined property may be further limited to neighboring cells of masked cells for which the original indication of the predetermined property fulfills a predetermined condition. For example, in the case of occupancy as the predetermined property, this condition may comprise that there is occupancy in the respective cell according to the original indication.

Using a predetermined loss function, it is rated how well the reconstructed indication of the predetermined property corresponds to the original indication of the predetermined property derived from the training record of measurement data. For example, if the predetermined property is binary occupancy of cells (occupied or not occupied), it may be counted for how many of the considered cells the prediction is correct.

Parameters that characterize the behavior of the encoder are optimized towards the goal of improving the rating by the loss function upon further processing of training records. This means that, based on the rating by the loss function, the parameters are varied, it is checked during the further processing of training records how the rating by the loss function evolves, and the parameters are varied in the next iteration based on this feedback.

In this manner, the encoder is trained in a self-supervised manner because the information against which the output of the encoder is checked is determined from the unlabelled training records themselves. With this self-supervised training, the encoder can already learn most of the skills that it later needs in the final setting where it is combined with a task-specific decoder that outputs a result with respect to a given task. This means that a lesser amount of labelled training records will be needed to learn the remainder of the required skills. Even if the total computational burden of first training with unlabelled data and then training with labelled data is higher than that of directly training with labelled data, the overall cost of the training is reduced because labelled training data is so expensive. A training on labelled data might even not be possible in the first place if the required amount of labelled training records just isn't available. The mere willingness to pay does not cogently produce labelled training records.

The main advantage of considering only a reconstructed indication of the predetermined property from cells neighbouring not-masked cells is that the encoder is encouraged to produce representations containing localized information. In this manner, the encoder is better trained for analyzing the object content of sceneries, which is a frequent task when monitoring the environment of a vehicle or robot. The localized information may, for example, encode local patterns, such as constellations of cars, streets and buildings, rather than the scenery as a whole.

The reasoning behind this is that traffic-relevant objects in sceneries are usually localized and have finite dimensions in space. An object may make a good contribution to the training if the masking obscures part of it, and the reconstructing of the predetermined property (such as occupancy) can use the still discernible remainder of the object to predict the masked information. For example, if only a part of a truck is obscured during masking, a well-trained encoder will still treat it as a truck. By contrast, it is not apparent how a car that is completely obscured during masking of one part of a captured scenery shall be connected to a far-away part of the scenery where an indication of the predetermined property is sought: a direct spatial correlation between the two locations is lacking.

Furthermore, the computational requirements are reduced. For example, in a typical radar or lidar measurement where the space is divided into a very fine regular grid, only a small fraction of all available cells will be relevant for the task at hand in the first place. Computation of occupancy for all other cells is superfluous. There may also be other predetermined properties that are much more computationally expensive to check per cell, or to compare between the original indication and its reconstruction.

The invention also provides a second method for training an encoder that is configured for encoding a record of measurement data into a representation in a working space. This method also strives to improve the result of the training, and in particular the performance of a final setting comprising the trained encoder and a task-specific decoder, for input data that is produced when monitoring the environment of a vehicle or robot for potentially traffic-relevant objects. Like the first method, this method presumes that the measurement data comprises measurement values that are associated with positions in space.

Akin to the first method, at least one training record of measurement data is provided. Cells are designated in space. At least some of these cells contain positions in space to which measurement values in the training record of measurement data are associated.

As a variation compared to the first method, an indication of a predetermined property is determined for at least one group of cells, rather than for individual cells. That is, there is one indication that is valid for the whole group of cells, and it is not further differentiated which cell makes which contribution to this. In one example, such grouping may be done using Cartesian coordinates. For example, rectangular (or otherwise polygonal) areas comprising multiple cells may be designated as groups.

Akin to the first method, a masked record of measurement data is created by removing, from the measurement data in the training record of measurement data, all measurement values that are associated with positions in space that lie in at least one to-be-masked cell. The masked record of measurement data is provided to the to-be-trained encoder, so that a representation results.

As a variation compared to the first method, a decoder decodes the representation into a reconstructed indication of the predetermined property for at least one group of cells, rather than for individual cells. This means that there is just one indication for the whole group without the possibility to differentiate further between individual cells belonging to this group. Optionally, akin to the first method, the reconstructing of an indication of the predetermined property may be limited to at most neighboring groups of not-masked groups. The effect is then that the reconstruction is limited to neighbouring cells of cells that are not affected by the masking of groups. This means that only reconstructions in these neighboring groups (cells) are used further even if also other reconstructions are computed. That is, the first and second method may be combined. But this is not required.

Akin to the first method, it is rated, using a predetermined loss function, how well the reconstructed indication of the predetermined property corresponds to the original indication of the predetermined property derived from the training record of measurement data. Parameters that characterize the behavior of the encoder are optimized towards the goal of improving the rating by the loss function upon further processing of training records.

As already mentioned above, like the first method, this method also improves the behavior of the encoder on input data that is produced when monitoring the environment of a vehicle or robot for potentially traffic-relevant objects. But it acts upon a slightly different facet of the problem: It achieves a better performance across a larger range of object sizes. It was found that, in traffic situations, there are objects of very different sizes. For example, there are pedestrians, small vehicles such as bikes, e-scooters, motorcycles and small cars, and larger vehicles such as trucks in which many pedestrians or smaller vehicles could fit. As discussed before, it is advantageous if the masking obscures part of an object, and the reconstruction can make use of the still discernible remainder of the object.

For this, it is beneficial if the size of the masked-out portion of the object is in a certain proportion to the size of the object. If a portion that is the size of a pedestrian is masked out of a large truck, this will barely have an effect at all. But if too much information is masked out, smaller objects may be prevented from making any more contribution. For example, if information from an area that is the size of a car is masked out, the contribution from a pedestrian may disappear completely. By being able to group cells, different sizes of objects may be accommodated.

In a particularly advantageous embodiment, the one or more groups of cells each comprise a number of (occupied and non-occupied) cells that is a non-negative integer power of 8. In the example of occupancy as the predetermined property, occupancy of one or more of these cells will then cause this group to be occupied. For example, the group may comprise 1, 8, 64 or 512 cells. Using powers of 8 is beneficial for assigning the work to GPUs or other hardware accelerators. It is also beneficial for three-dimensional grouping of cells because 8 is the 3rd power of 2.

In a further particularly advantageous embodiment, at least two groups of cells are chosen to comprise different numbers of cells. In this manner, the method can better cater for the presence of objects of multiple sizes in one and the same scenery. For example, the scenery may contain traffic participants of different sizes, such as pedestrians, cycles, cars and trucks.

In a further particularly advantageous embodiment, parameters that characterize the behavior of the decoder may also be optimized towards the goal of improving the rating by the loss function upon further processing of training records. That is, the encoder and the decoder may be trained in tandem. The decoder is specific to the training with unlabelled data and may be discarded after the training with unlabelled data has been completed. The trained encoder may then be combined with a task-specific decoder for further training towards solving a given task.

As discussed before, in a further particularly advantageous embodiment, the predetermined property of the cell, or group of cells, comprises occupancy information indicating whether at least one measurement value in the training record of measurement data is associated with a position in the cell, or in at least one cell of the group of cells, respectively. This property is computationally fast to check, and the corresponding property indicator is fast to compare between the original derived from the unmasked training records on the one hand and the reconstruction from the representations of the masked training records on the other hand. For example, a binary cross entropy loss may be used to rate how well the occupancy information is reconstructed.

As discussed before, in a particularly advantageous embodiment, wherein the training record of measurement data comprises measurement values indicating an intensity of a reflected electromagnetic or acoustic interrogation beam that appears to come from a particular point in space. These measurement methods produce point cloud data where one or measurement values are directly attributed to points in space. In particular, the checking of occupancy is particularly convenient for such point cloud data. Moreover, radar and lidar measurements deliver particularly high-resolution three-dimensional representations of the environment of a vehicle or robot. In particular, radar measurements have the further advantage that they are independent of weather and lighting conditions.

Irrespective of whether the first or the second method is used, in a further particularly advantageous embodiment, multiple groups of cells comprising different numbers of adjacent cells, and/or comprising cells of different size in space, are chosen as to-be-masked cells. If multiple masks of different sizes are applied to one and the same scenery, the total amount of information contained in the scenery may be split across multiple size scales of features. Typically, one traffic scenery contains enough information for the multiple size scales. In this manner, it is not necessary to duplicate the whole scenery multiple times for different size scales.

In a further particularly advantageous embodiment, different decoders are used to reconstruct, from the representation, the predetermined property for cells of different sizes in space, or groups of such cells of different sizes in space. In this manner, the work regarding multiple size scales may be parallelized across different hardware accelerators, such as GPUs.

Therefore, in a further particularly advantageous embodiment, correspondence of the reconstructed indication of the predetermined property to the original indication of the predetermined property is evaluated separately for each chosen size in space of the cells. From each so-determined correspondence, a proposal for a change of the to-be-optimized parameters is determined. These proposals are aggregated to form a final change of the to-be-optimized parameters. In this manner, the dependency of the final change of the to-be-optimized parameters on one single arbitrary choice of cell size is reduced. A proposal for a change of the parameters has a greater weight in the final change of the parameters if it is made consistently across different cell sizes, rather than being tied to one specific cell size.

As discussed before, the ultimate goal of the encoder is to participate in the processing of actual measurement data towards an output with respect to a given task. The training using unlabelled data cannot yet make the encoder proficient at this. Therefore, in a further particularly advantageous embodiment, a set of labelled training records of measurement data is provided. The measurement data comprises measurement values that are associated with positions in space, as well as a label indicating a desired outcome of processing of this labelled training record with respect to a given task.

Representations of the labelled training records of measurement data are obtained by means of the encoder that has been trained as described above. By means of a task-specific decoder, the so-obtained representations are decoded into an output with respect to the given task. That is, the previously used decoder that produced the reconstructed indication of the predetermined property is replaced with a new, task-specific one. Prime examples of tasks that need to be performed on measurement data resulting from the monitoring of the environment of a vehicle and/or robot include the detection and/or classification of object instances, as well as semantic segmentation of the measurement data.

By means of a predetermined task loss function, it is rated how well the so-obtained output corresponds to the label of the respective labelled training record. Parameters that characterize the behavior of the encoder are further optimized towards the goal of improving the rating by the task loss function upon further processing of labelled training records.

In this context, the use of the training with unlabelled data as sketched above has the effect that less labelled training records are required in order to complete the training towards solving the given task with satisfactory accuracy. Moreover, as discussed above, given a certain amount of labelled training records, the training towards the given task may become feasible in the first place in this manner. Also, the final accuracy that is obtained is higher than if the encoder and decoder were directly trained on the given task without the pre-training of the encoder according to the presently proposed method.

In a further particularly advantageous embodiment, parameters that characterize the behavior of the task-specific decoder are also optimized towards the goal of improving the rating by the loss function upon further processing of labelled training records. That is, the further training of the encoder may proceed in tandem with the (further) training of the decoder.

After the training towards the given task, in a further particularly advantageous embodiment, at least one record of measurement data that has been acquired by at least one sensor is provided to the encoder. In this manner, a representation of this record of measurement data is obtained. The representation is then decoded into an output with respect to the given task. As discussed before, this is the ultimate goal of the training of the encoder according to the proposed method.

In a further particularly advantageous embodiment, an actuation signal is computed from the output. A vehicle, a robot, a driving assistance system, a quality inspection system, a surveillance system, and/or a medical imaging system, is actuated with the actuation signal. In this manner, the probability that the reaction of the respective actuated technical system is appropriate given the record of measurement data is improved.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

### Description of the Figures

In the following, the invention is illustrated using Figures without any intention to limit the scope of the invention. The Figures show:
Figure 1: Exemplary embodiment of the first method 100 for training an encoder 1 that is configured for encoding a record 2 of measurement data into a representation 3 in a working space;
Figure 2: Exemplary embodiment of the second method 200 for training an encoder 1 that is configured for encoding a record 2 of measurement data into a representation 3 in a working space;
Figure 3: Exemplary method steps common to both methods 100 and 200;
Figure 4: Exemplary illustration how a training record 2a of measurement data may be processed during training of the encoder 1;
Figure 5: Exemplary illustration of decoding at different scales in space by different decoders 5, 5' and 5";
Figure 6: Exemplary illustration of hierarchical mask generation;
Figure 7: Exemplary reconstruction of a desired property based on hierarchical masks shown in Figure 6.

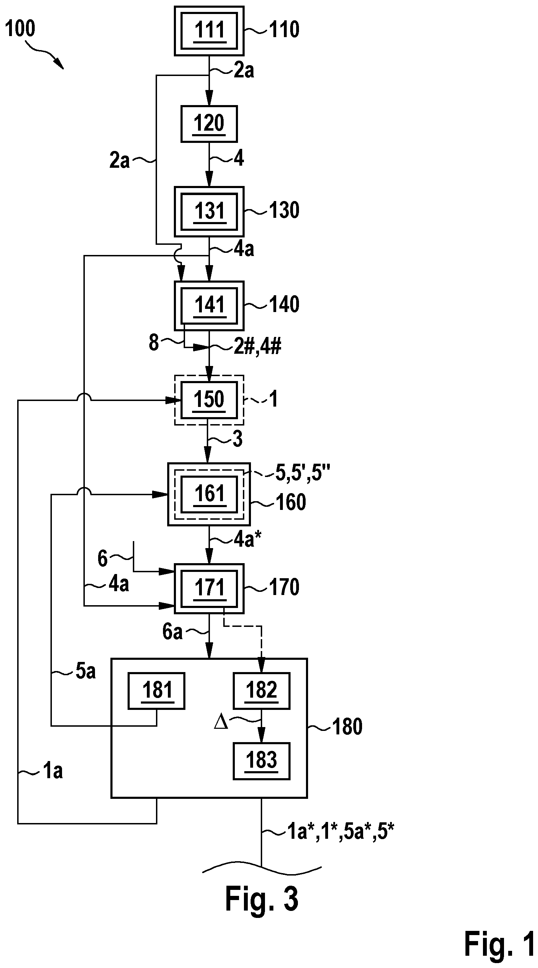

Figure 1 is a schematic flow chart of an embodiment of the first method 100 training an encoder 1. The encoder 1 is configured for encoding a record 2 of measurement data into a representation 3 in a working space.

In step 110, at least one training record 2a of measurement data is provided.

According to block 111, the training record 2a of measurement data may comprise measurement values indicating an intensity of a reflected electromagnetic or acoustic interrogation beam that appears to come from a particular point in space.

In step 120, cells 4 are designated in space. At least some of the cells 4 contain positions in space to which measurement values in the training record 2a of measurement data are associated.

In step 130, for each cell 4, based on the training record 2a of measurement data, an indication 4a of a predetermined property is determined.

In step 140, a masked record 2# of measurement data is created by removing, from the training record 2a of measurement data, all measurement values that are associated with positions in space that lie in at least one to-be-masked cell 4#.

According to block 141, multiple groups 8 of cells 4 comprising different numbers of adjacent cells 4, and/or comprising cells of different sizes in space may be chosen as to-be-masked cells 4#

In step 150, the masked record 2# of measurement data is provided to the to-be-trained encoder 1. This results in a representation 3.

In step 160, a decoder 5 decodes the representation 3 into a reconstructed indication 4a* of the predetermined property for at most neighboring cells of not-masked cells 4.

According to block 161, different decoders 5, 5', 5" may be used to reconstruct, from the representation 3, the predetermined property for cells 4 of different sizes in space.

In step 170, it is rated, by means of a predetermined loss function 6, how well the reconstructed indication 4a*of the predetermined property corresponds to the original indication 4a of the predetermined property derived from the training record 2a of measurement data. This produces a rating 6a.

According to block 171, correspondence of the reconstructed indication 4a* of the predetermined property to the original indication 4a of the predetermined property may be evaluated separately for each chosen size in space of the cells 4.

In step 180, parameters 1a that characterize the behavior of the encoder 1 are optimized towards the goal of improving the rating 6a by the loss function 6 upon further processing of training records 2a. The result comprises an optimized state 1a* of the parameters 1a of the encoder 1. This optimized state 1a* defines the pre-trained state 1* of the encoder 1. The result may also comprise an optimized state 5a* of the parameters 5a of the decoder 5. This optimized state 5a* defines the trained state 5* of the decoder 5.

According to block 181, also parameters 5a that characterize the behavior of the decoder 5 may be optimized towards the goal of improving the rating 6a by the loss function 6 upon further processing of training records 2a.

If correspondences to the original indication of the predetermined property are determined separately for different sizes of cells 4 in space, according to block 182, a proposal Δ for a change of the to-be-optimized parameters 1a, 5a may be determined from each so-determined correspondence. According to block 183, these proposals Δ may then be aggregated to form a final change of the to-be-optimized parameters 1a, 5a.

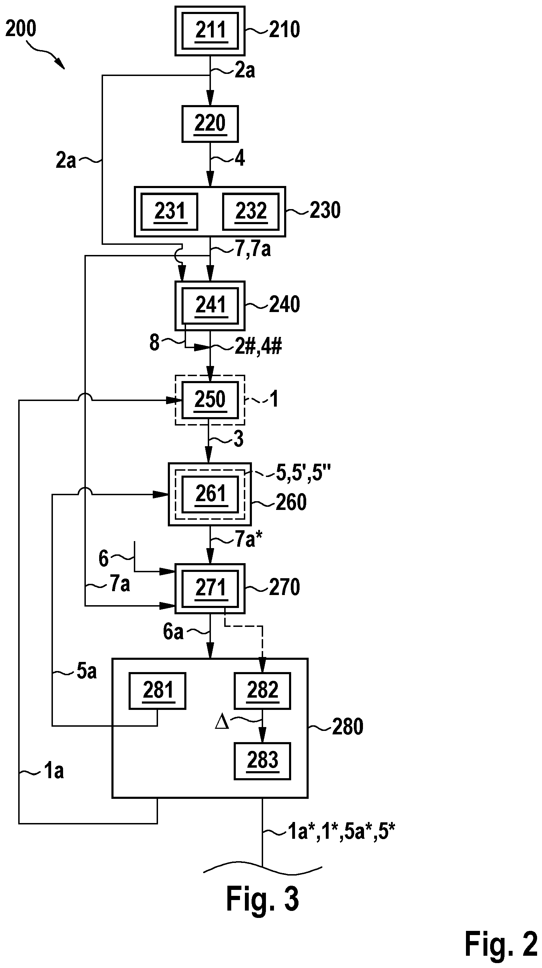

Figure 2 is a schematic flow chart of an embodiment of the second method 200 training an encoder 1. The encoder 1 is configured for encoding a record 2 of measurement data into a representation 3 in a working space. The second method 200 is a variation of the first method 100, so only the differences are mentioned here in more detail.

Step 210 and block 211 correspond to step 110 and block 111.

Step 220 corresponds to step 120.

In step 230, for at least one group 7 of cells 4, an indication 7a of a predetermined property is determined.

According to block 231, the one or more groups 7 of cells 4 may each comprise a number of cells 4 that is a non-negative integer power of 8.

According to block 232, at least two groups 7 of cells 4 may be chosen to comprise different numbers of cells 4.

Step 240 and block 241 correspond to step 140 and block 141.

Step 250 corresponds to step 150.

In step 260, a decoder 5 decodes the representation 3 into a reconstructed indication 7a* of the predetermined property for at least one group 7 of cells 4, which may optionally be limited to at most neighboring cells of not-masked cells 4 like in the first method 100.

According to block 261, different decoders 5, 5', 5" may be used to reconstruct, from the representation 3, the predetermined property for groups 7 of cells 4 of different sizes in space.

In step 270, it is rated, by means of a predetermined loss function 6, how well the reconstructed indication 7a* of the predetermined property corresponds to the original indication 7a of the predetermined property derived from the training record 2a of measurement data. This produces a rating 6a.

According to block 271, correspondence of the reconstructed indication 7a* of the predetermined property to the original indication 7a of the predetermined property may be evaluated separately for each chosen size in space of the cells 4.

Step 280 and blocks 281 to 283 correspond to step 180 and blocks 181 to 183.

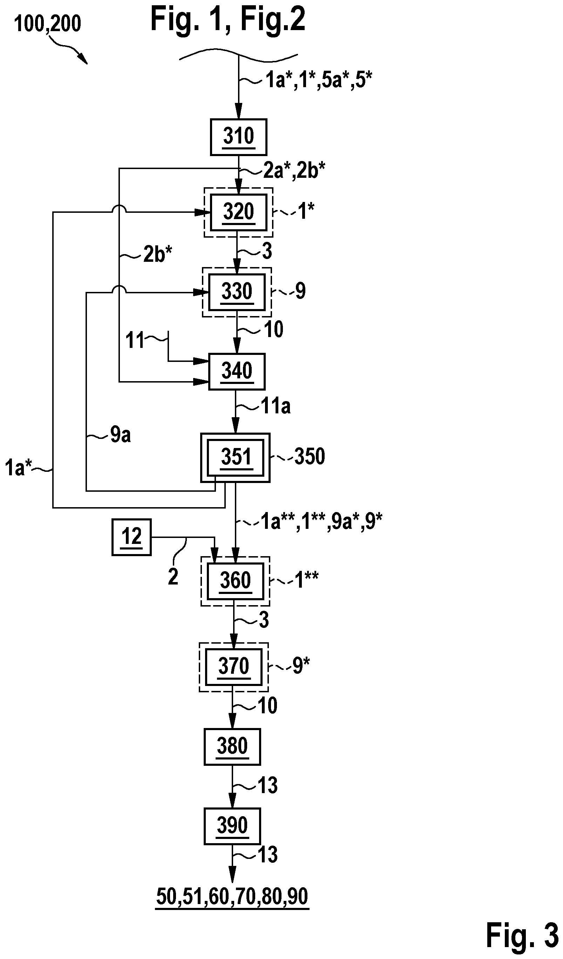

Figure 3 shows exemplary method steps that may be applied both in the method 100 and in the method 200, based on a situation where a pre-trained state 1* of the encoder 1 characterized by optimized parameters 1a* is present.

In step 310, a set of labelled training records 2a* of measurement data is provided. This measurement data comprises measurement values that are associated with positions in space, as well as a label 2b* indicating a desired outcome of processing of this labelled training record with respect to a given task.

In step 320, representations 3 of the labelled training records 2a* of measurement data are obtained by means of the pre-trained encoder 1*.

In step 330, a task-specific decoder 9 decodes the so-obtained representations 3 into an output 10 with respect to the given task.

In step 340, a predetermined task loss function 11 rates how well the so-obtained output 10 corresponds to the label 2b* of the respective labelled training record 2a*. The result is a rating 11a.

In step 350, the pre-trained parameters 1a* that characterize the behavior of the encoder 1* are further optimized towards the goal of improving the rating 11a by the task loss function 11 upon further processing of labelled training records 2a*. The result comprises further optimized parameters 1a** that characterize a fully trained state 1** of the encoder 1.

According to block 351, parameters 9a that characterize the behavior of the task-specific decoder 9 are also optimized towards the goal of improving the rating by the loss function upon further processing of labelled training records 2a*. This may result in optimized parameters 9a* that characterize a trained state of the task-specific decoder 9.

In step 360, at least one record 2 of measurement data that has been acquired by at least one sensor 12 is provided to the fully trained encoder 1**. In this manner, a representation 3 of this record 2 of measurement data is obtained.

In step 370, the trained task-specific decoder 9* decodes the representation 3 into an output 10 with respect to the given task.

In the example shown in Figure 3, in step 380, an actuation signal 13 is computed from the output 10 with respect to the given task. In step 390, a vehicle 50, a robot 60, a driving assistance system 51, a quality inspection system 70, a surveillance system 80, and/or a medical imaging system 90, is then actuated with the actuation signal 13.

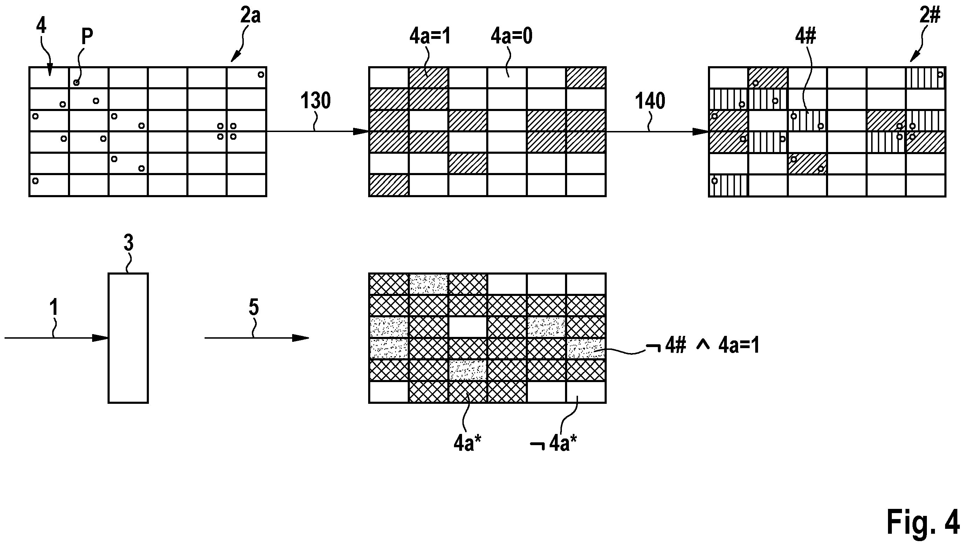

Figure 4 illustrates in a simple example how a training record 2a of measurement data may be processed during training of the encoder 1. The training record 2a comprises a cloud of points P to which measurement values are associated. Cells 4 are designated in space, so that each cell 4 contains zero, one or more points P. In the example shown in Figure 4, the resolution of the grid of cells 4 is so high that each cell 4 contains at most two points P.

In step 130 of the method 100, occupancy of the cells 4 is determined as the predetermined property, based on the training record 2a of measurement data. The indication 4a of this predetermined property is binary: if the cell 4 is occupied, the indication 4a is 1 for this cell 4, otherwise it is 0 for this cell 4.

In step 140 of the method 100, a masked record 2# of measurement data is determined. To this end, measurement points P are removed from a set of masked cells 4#. In the cells 4 that are not masked, the masked record 2# of measurement data still contains the same points P as the corresponding cells 4 in the original training record 2a of measurement data.

The encoder 1 transforms the masked record 2# of measurement data into a representation 3. The encoder 5 reconstructs indications 4a* of the predetermined property, here: occupancy, only for neighboring cells of those cells 4 that are not in the set of masked cells 4# (_{¬}4#). In the example shown in Figure 4, the reconstructing of indications 4a* is further limited to neighboring cells of those not-masked cells _{¬}4# for which there is occupancy according to the original indication (_{¬}4# ∧ 4a=1). For all other cells 4, no reconstructed indication 4a* is computed (_{¬}4a*).

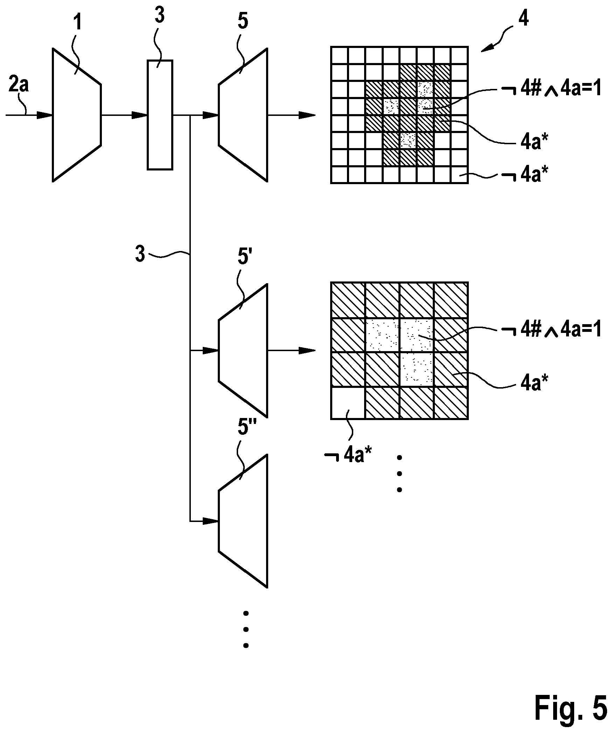

Figure 5 illustrates on one example how the predetermined property may be reconstructed for cells of different sizes in space, i.e., at different scales in space.

As it has been illustrated in Figure 4, the training record 2a of measurement data is processed into a representation 3 by the encoder 1. This representation 3 is fed to three separate decoders 5, 5', 5". Like in Figure 4, the first decoder 5 produces reconstructed indications 4a* of the predetermined property for neighboring cells of not masked cells for which there was occupancy according to the original indication (4a _{¬}4# ∧ 4a=1) at a first scale of sizes of cells 4 in space. The second decoder 5' produces reconstructed indications 4a* of the predetermined property for neighboring cells of not masked cells for which there was occupancy according to the original indication 4a (_{¬}4# ∧ 4a=1) at a second scale of sizes of cells 4' in space. Likewise, the third decoder 5" does the same at a third scale of cells in space.

That is, from one and the same representation 3, reconstructed indications 4a* at different size scales of the cells 4 may be asked for. These may then compared to the original indications 4a of the predetermined property at the respective size scale.

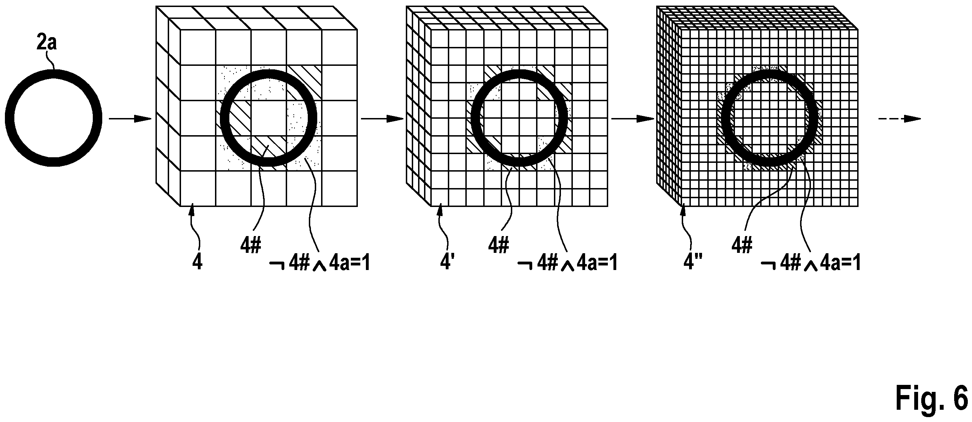

Figure 6 illustrates how sets of masked cells 4# may be generated in a hierarchical manner on different size scales. Starting from one and the same training record 2a of measurement data, cells 4, 4' and 4" of different sizes are designated in space. For each scale of sizes of cells 4, 4' and 4" separately, occupancy 4a is determined as the predetermined property, and then some of the cells for which there is occupancy (4a=1) are designated as masked cells 4#. As a result, there are then masked records 2# of measurement data at the respective size scales with
- cells 4, 4' and 4" that have always been empty, i.e., devoid of measurement points P,
- cells 4# that are empty by virtue of having been masked, and
- cells _{¬}4# ∧ 4a=1 that are not masked and for which there is occupancy 4a.

Generally, the scale of the masking can be different from the scale of reconstruction. For example, a random mask can be generated on a coarse scale and then upsampled to match the resolution of the reconstruction. However, random masking on the same scale as the reconstruction scale performs best. If masks on multiple size scales are used, they should advantageously be consistent to avoid "information leakage". That is, a cell 4 that is masked on a coarser scale should not be visible on a finer scale. As it is shown in Figure 6, the coarsest scale is masked first, using a random sampling of all occupied cells 4 with a given probability r. Then, the sampling is repeated for the cells 4' on the next finer scale for all cells 4' that are within still visible cells 4 on the previous, coarser scale, and so on, with the same masking probability r. In this manner, it is ensured that coarser scales have a sufficient number of masked cells 4# without reducing the size of reconstructed neighborhoods at finer scales.

Only the visible cells _{¬}4# ∧ 4a=1 on the finest scale may be chosen to be fed to the encoder 1. Decoding may then be done on this finest scale, but also on the coarser scales.

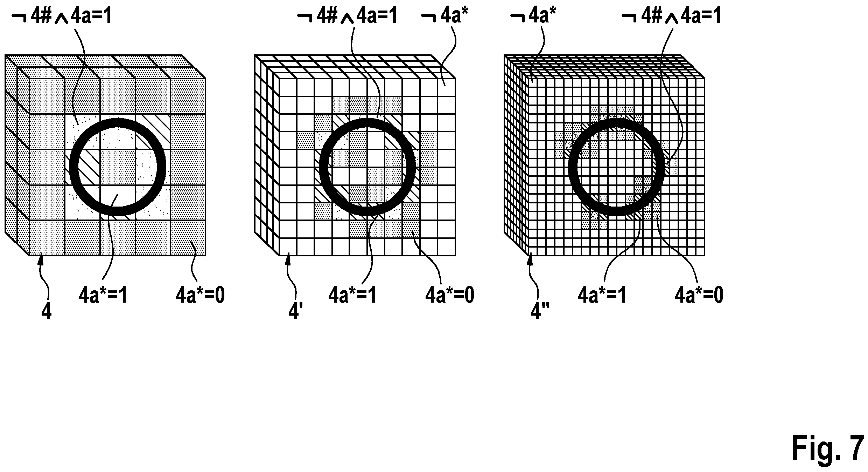

Figure 7 illustrates how occupancy as the predetermined property may be reconstructed based on the hierarchical masks generated as shown in Figure 6.

Reconstructed values 4a* for the predetermined property are computed for all cells 4 that are neighbors of cells that have not been masked (i.e., are visible), and also have occupancy according to the original indication 4a, that is, _{¬}4# ∧ 4a=1 is true. For some cells, the reconstruction 4a* has a value of 0, but for other cells, the reconstruction 4a* has a value of 1, in line with the original training record 2a of measurement data. On the coarsest size scale of cells 4, there are no cells 4 that are not neighbors of cells for which _{¬}4# ∧ 4a=1 is true.

On the next-finer size scale of cells 4', the cells with reconstructions 4a*=0 on the one hand, and with reconstructions 4a*=1 on the other hand, more accurately delineate the shape of the ring-shaped original feature in the training record 2a of measurement data. At the same time, there are also cells for which no reconstruction is computed (_{¬}4a*) because these cells are not neighbors of cells for which _{¬}4# ∧ 4a=1 is true.

This is even more pronounced when proceeding to the next-finer size scale of cells 4". Here, the cells for which _{¬}4# ∧ 4a=1 is true and their neighboring cells for which reconstructions 4a*=1 are predicted reproduce the ring shaped original feature quite well. At the same time, the majority of cells 4" are not neighbors of any cell for which _{¬}4# ∧ 4a=1 is true, so no prediction 4a* is computed for them (_{¬}4a*). As discussed before, this saves computation time and memory.

## Claims

1. A method (100) for training an encoder (1) that is configured for encoding a record (2) of measurement data into a representation (3) in a working space, the measurement data comprising measurement values that are associated with positions in space, the method (100) comprising the steps of:
• providing (110) at least one training record (2a) of measurement data;
• designating (120) cells (4) in space, wherein at least some of the cells (4) contain positions in space with which measurement values in the training record (2a) of measurement data are associated;
• determining (130), for each cell (4), based on the training record (2a) of measurement data, an indication (4a) of a predetermined property;
• creating (140) a masked record (2#) of measurement data by removing, from the training record (2a) of measurement data, all measurement values that are associated with positions in space that lie in at least one to-be-masked cell (4#);
• providing (150) the masked record (2#) of measurement data to the to-be-trained encoder (1), thereby obtaining a representation (3);
• decoding (160), by a decoder (5), the representation (3) into a reconstructed indication (4a*) of the predetermined property for at most neighboring cells of not-masked cells (4);
• rating (170), by means of a predetermined loss function (6), how well the reconstructed indication (4a*)of the predetermined property corresponds to the original indication (4a) of the predetermined property derived from the training record (2a) of measurement data; and
• optimizing (180) parameters (1a) that characterize the behavior of the encoder (1) towards the goal of improving the rating (6a) by the loss function (6) upon further processing of training records (2a).

2. A method (200) for training an encoder (1) that is configured for encoding a record (2) of measurement data into a representation (3) in a working space, the measurement data comprising measurement values that are associated with positions in space, the method (200) comprising the steps of:
• providing (210) at least one training record (2a) of measurement data;
• designating (220) cells (4) in space, wherein at least some of the cells (4) contain positions in space to which measurement values in the training record (2a) of measurement data are associated;
• determining (230), for at least one group (7) of cells (4), an indication (7a) of a predetermined property;
• creating (240) a masked record (2#) of measurement data by removing, from the training record (2a) of measurement data, all measurement values that are associated with positions in space that lie in at least one to-be-masked cell (4#);
• providing (250) the masked record (2#) of measurement data to the to-be-trained encoder (1), thereby obtaining a representation (3);
• decoding (260), by a decoder (5), the representation (3) into a reconstructed indication (7a*) of the predetermined property for at least one group (7) of cells (4);
• rating (270), by means of a predetermined loss function (6), how well the reconstructed indication (7a*) of the predetermined property corresponds to the original indication (7a) of the predetermined property derived from the training record (2a) of measurement data; and
• optimizing (280) parameters (1a) that characterize the behavior of the encoder (1) towards the goal of improving the rating by the loss function upon further processing of training records.

3. The method (200) of claim 2, wherein the one or more groups (7) of cells (4) each comprise (231) a number of cells (4) that is a non-negative integer power of 8.

4. The method (200) of any one of claims 2 to 3, wherein at least two groups (7) of cells (4) are chosen (232) to comprise different numbers of cells (4).

5. The method (100, 200) of any one of claims 1 to 4, further comprising:
optimizing (181, 281) parameters (5a) that characterize the behavior of the decoder (5) towards the goal of improving the rating (6a) by the loss function (6) upon further processing of training records (2a).

6. The method (100, 200) of any one of claims 1 to 5, wherein the predetermined property of the cell (4), or group (7) of cells (4), comprises (131, 231) occupancy information indicating whether at least one measurement value in the training record (2a) of measurement data is associated with a position in the cell (4), or in at least one cell (4) of the group (7) of cells (4), respectively.

7. The method (100, 200) of any one of claims 1 to 6, wherein the training record (2a) of measurement data comprises (111, 211) measurement values indicating an intensity of a reflected electromagnetic or acoustic interrogation beam that appears to come from a particular point in space.

8. The method (100, 200) of any one of claims 1 to 7, wherein multiple groups (8) of cells (4) comprising different numbers of adjacent cells (4), and/or comprising cells of different sizes in space are chosen (141, 241) as to-be-masked cells (4#).

9. The method (100, 200) of any one of claims 1 to 8, wherein different decoders (5, 5', 5") are used to reconstruct (161, 261), from the representation (3), the predetermined property for cells (4) of different sizes in space, or groups (7) of such cells (4) of different sizes in space.

10. The method (100, 200) of claim 9, wherein
• correspondence of the reconstructed indication (4a*, 7a*) of the predetermined property to the original indication (4a, 7a) of the predetermined property is evaluated (171, 271) separately for each chosen size in space of the cells (4);
• from each so-determined correspondence, a proposal (Δ) for a change of the to-be-optimized parameters (1a, 5a) is determined (182, 282); and
• these proposals (Δ) are aggregated (183, 283) to form a final change of the to-be-optimized parameters (1a, 5a).

11. The method (100) of any one of claims 1 to 10, further comprising:
• providing (310) a set of labelled training records (2a*) of measurement data, the measurement data comprising measurement values that are associated with positions in space, as well as a label (2b*) indicating a desired outcome of processing of this labelled training record with respect to a given task;
• obtaining (320) representations (3) of the labelled training records (2a*) of measurement data by means of the trained encoder (1*);
• decoding (330), by a task-specific decoder (9), the so-obtained representations (3) into an output (10) with respect to the given task;
• rating (340), by means of a predetermined task loss function (11), how well the so-obtained output (10) corresponds to the label (2b*) of the respective labelled training record (2a*); and
• further optimizing (350) parameters (1a*) that characterize the behavior of the encoder (1*) towards the goal of improving the rating (11a) by the task loss function (11) upon further processing of labelled training records (2a*).

12. The method (100) of claim 11, further comprising: optimizing (351) parameters (9a) that characterize the behavior of the task-specific decoder (9) towards the goal of improving the rating by the loss function upon further processing of labelled training records (2a*).

13. The method (100) of any one of claims 11 to 12, further comprising, after the further optimizing (350):
• providing (360) at least one record (2) of measurement data that has been acquired by at least one sensor (12) to the encoder (1**), thereby obtaining a representation (3) of this record (2) of measurement data; and
• decoding (370), by the task-specific decoder (9*), the representation (3) into an output (10) with respect to the given task.

14. The method of claim 13, further comprising:
• computing (380), from the output (10) with respect to the given task, an actuation signal (13); and
• actuating (390) a vehicle (50), a robot (60), a driving assistance system (51), a quality inspection system (70), a surveillance system (80), and/or a medical imaging system (90), with the actuation signal (13).

15. A computer program, comprising machine-readable instructions that, when executed by one or more computers and/or compute instances, causes the one or more computers and/or compute instances to perform the method (100) of any one of claims 1 to 14.

16. A non-transitory computer-readable data carrier, and/or a download product, with the computer program of claim 15.

17. One or more computers and/or compute instances with the computer program of claim 15, and/or with the non-transitory computer-readable data carrier and/or with the download product of claim 16.

## Amended claims

### Amended claims in accordance with Rule 137(2) EPC.

1. A computer-implemented method (100) for training an encoder (1) that is configured for encoding a record (2) of measurement data into a representation (3) in a working space, the measurement data comprising measurement values that are associated with positions in space, the method (100) comprising the steps of:
• providing (110) at least one training record (2a) of measurement data, wherein the training record (2a) of measurement data comprises (111, 211) measurement values indicating an intensity of a reflected electromagnetic or acoustic interrogation beam that appears to come from a particular point in space;
• designating (120) cells (4) in space, wherein at least some of the cells (4) contain positions in space with which measurement values in the training record (2a) of measurement data are associated;
• determining (130), for each cell (4), based on the training record (2a) of measurement data, an indication (4a) of a predetermined property, wherein the predetermined property of the cell (4) comprises (131) occupancy information indicating whether at least one measurement value in the training record (2a) of measurement data is associated with a position in the cell (4);
• creating (140) a masked record (2#) of measurement data by removing, from the training record (2a) of measurement data, all measurement values that are associated with positions in space that lie in at least one to-be-masked cell (4#);
• providing (150) the masked record (2#) of measurement data to the to-be-trained encoder (1), thereby obtaining a representation (3);
• decoding (160), by a decoder (5), the representation (3) into a reconstructed indication (4a*) of the predetermined property for at most neighboring cells of not-masked cells (4);
• rating (170), by means of a predetermined loss function (6), how well the reconstructed indication (4a*)of the predetermined property corresponds to the original indication (4a) of the predetermined property derived from the training record (2a) of measurement data; and
• optimizing (180) parameters (1a) that characterize the behavior of the encoder (1) towards the goal of improving the rating (6a) by the loss function (6) upon further processing of training records (2a).

2. A computer-implemented method (200) for training an encoder (1) that is configured for encoding a record (2) of measurement data into a representation (3) in a working space, the measurement data comprising measurement values that are associated with positions in space, the method (200) comprising the steps of:
• providing (210) at least one training record (2a) of measurement data, wherein the training record (2a) of measurement data comprises (111, 211) measurement values indicating an intensity of a reflected electromagnetic or acoustic interrogation beam that appears to come from a particular point in space;
• designating (220) cells (4) in space, wherein at least some of the cells (4) contain positions in space to which measurement values in the training record (2a) of measurement data are associated;
• determining (230), for at least one group (7) of cells (4), an indication (7a) of a predetermined property, wherein the predetermined property of the group (7) of cells (4), comprises (231) occupancy information indicating whether at least one measurement value in the training record (2a) of measurement data is associated with a position in at least one cell (4) of the group (7) of cells (4);
• creating (240) a masked record (2#) of measurement data by removing, from the training record (2a) of measurement data, all measurement values that are associated with positions in space that lie in at least one to-be-masked cell (4#);
• providing (250) the masked record (2#) of measurement data to the to-be-trained encoder (1), thereby obtaining a representation (3);
• decoding (260), by a decoder (5), the representation (3) into a reconstructed indication (7a*) of the predetermined property for at least one group (7) of cells (4);
• rating (270), by means of a predetermined loss function (6), how well the reconstructed indication (7a*) of the predetermined property corresponds to the original indication (7a) of the predetermined property derived from the training record (2a) of measurement data; and
• optimizing (280) parameters (1a) that characterize the behavior of the encoder (1) towards the goal of improving the rating by the loss function upon further processing of training records.

3. The method (200) of claim 2, wherein the one or more groups (7) of cells (4) each comprise (231) a number of cells (4) that is a non-negative integer power of 8.

4. The method (200) of any one of claims 2 to 3, wherein at least two groups (7) of cells (4) are chosen (232) to comprise different numbers of cells (4).

5. The method (100, 200) of any one of claims 1 to 4, further comprising: optimizing (181, 281) parameters (5a) that characterize the behavior of the decoder (5) towards the goal of improving the rating (6a) by the loss function (6) upon further processing of training records (2a).

6. The method (100, 200) of any one of claims 1 to 7, wherein multiple groups (8) of cells (4) comprising different numbers of adjacent cells (4), and/or comprising cells of different sizes in space are chosen (141, 241) as to-be-masked cells (4#).

7. The method (100, 200) of any one of claims 1 to 6, wherein different decoders (5, 5', 5") are used to reconstruct (161, 261), from the representation (3), the predetermined property for cells (4) of different sizes in space, or groups (7) of such cells (4) of different sizes in space.

8. The method (100, 200) of claim 7, wherein
• correspondence of the reconstructed indication (4a*, 7a*) of the predetermined property to the original indication (4a, 7a) of the predetermined property is evaluated (171, 271) separately for each chosen size in space of the cells (4);
• from each so-determined correspondence, a proposal (Δ) for a change of the to-be-optimized parameters (1a, 5a) is determined (182, 282); and
• these proposals (Δ) are aggregated (183, 283) to form a final change of the to-be-optimized parameters (1a, 5a).

9. The method (100) of any one of claims 1 to 8, further comprising:
• providing (310) a set of labelled training records (2a*) of measurement data, the measurement data comprising measurement values that are associated with positions in space, as well as a label (2b*) indicating a desired outcome of processing of this labelled training record with respect to a given task;
• obtaining (320) representations (3) of the labelled training records (2a*) of measurement data by means of the trained encoder (1*);
• decoding (330), by a task-specific decoder (9), the so-obtained representations (3) into an output (10) with respect to the given task;
• rating (340), by means of a predetermined task loss function (11), how well the so-obtained output (10) corresponds to the label (2b*) of the respective labelled training record (2a*); and
• further optimizing (350) parameters (1a*) that characterize the behavior of the encoder (1*) towards the goal of improving the rating (11a) by the task loss function (11) upon further processing of labelled training records (2a*).

10. The method (100) of claim 9, further comprising: optimizing (351) parameters (9a) that characterize the behavior of the task-specific decoder (9) towards the goal of improving the rating by the loss function upon further processing of labelled training records (2a*).

11. The method (100) of any one of claims 9 to 10, further comprising, after the further optimizing (350):
• providing (360) at least one record (2) of measurement data that has been acquired by at least one sensor (12) to the encoder (1**), thereby obtaining a representation (3) of this record (2) of measurement data; and
• decoding (370), by the task-specific decoder (9*), the representation (3) into an output (10) with respect to the given task.

12. The method of claim 11, further comprising:
• computing (380), from the output (10) with respect to the given task, an actuation signal (13); and
• actuating (390) a vehicle (50), a robot (60), a driving assistance system (51), a quality inspection system (70), a surveillance system (80), and/or a medical imaging system (90), with the actuation signal (13).

13. A computer program, comprising machine-readable instructions that, when executed by one or more computers and/or compute instances, causes the one or more computers and/or compute instances to perform the method (100) of any one of claims 1 to 12.

14. A non-transitory computer-readable data carrier, and/or a download product, comprising the computer program of claim 13.

15. One or more computers configured by the computer program of claim 15 to perform the method of any one of claims 1 to 12, and/or with the non-transitory computer-readable data carrier and/or with the download product of claim 14.
